# EUROPEAN PATENT SPECIFICATION

(11) **EP 2 844 107 B1**
(45) Date of publication and mention of the grant of the patent: **27.04.2016**
(21) Application number: 13729443.5
(22) Date of filing: 29.04.2013
(51) Int. Cl.: A47B 57/22, F16B 12/22, F16B 5/00

(54) **A SHELF**
REGALBRETT
ÉTAGÈRE

(30) Priority: 02.05.2012 IT BO20120236
(43) Date of publication of application: 11.03.2015
(73) Proprietor: Kico S.r.l., 64025 Pineto (TE) (IT)
(72) Inventor: SILENZI, Domenico, I-64026 Roseto Degli Abruzzi (TE) (IT)
(74) Representative: Dall'Olio, Christian
(86) International application number: PCT/IB2013/053376
(87) International publication number: WO 2013/164753

(56) References cited:
- EP-A1- 2 177 129
- WO-A1-2010/034467
- CH-A- 101 351

## Description

### FIELD OF THE INVENTION

The present invention relates to the technical sector concerning shelves, used for supporting articles in various sectors, both civil and industrial.

### DESCRIPTION OF THE PRIOR ART

Document CH 101 351 discloses a shelf according to the preamble of claim 1.

A shelf of known type comprises a frame, which develops prevalently in a vertical direction and which comprises two or more longitudinally-developing uprights arranged aligned at a certain reciprocal distance.

The shelf further comprises a plurality of planes for receiving and supporting one or more articles, the planes are arranged between the uprights and fixed thereto, and are parallel to one another in a horizontal position.

To enable fixing the planes to the uprights, the shelf further comprises a plurality of fixing pins.

The uprights, on the other hand, include a plurality of through-holes, while the planes include a plurality of seatings; the through-holes of the uprights and the seating of the planes are aligned to one another once each plane is arranged between the uprights, and are conformed to contextually receive the fixing pins.

The above-described shelf however exhibits drawbacks.

The mounting operating required for fixing the planes to the uprights requires long working times; further, the operation is disadvantageous from the practical point of view.

In fact, it is often necessary to use various tools for inserting fixing pins in the holes of the uprights and at the same time in the seatings of the planes; further, at least two persons are needed to complete the mounting operations.
Further, the above-described shelf does not exhibit a pleasant aesthetic aspect, as the fixing pins and any further work operations are visible once the planes are fixed to the uprights.

### SUMMARY OF THE INVENTION

The aim of the present invention is to obviate the above-mentioned drawbacks.

The aim is attained by providing a shelf according to claim 1.

The shelf disclosed with the present invention is advantageously rapid to assemble and modest in terms of costs.

In fact, the presence of the elastic means is such that the fixing pins engage the seating immediately once facing them, without use of various tools as required in the prior art. Consequently, the mounting operations can be performed even by one person alone.

Further, the shelf of the invention exhibits an aesthetic aspect that is more pleasant than shelves of known type, as the fixing pin is not visible once the first and second element are fixed to one another.

Further, no further "in view" operations remain, either on the first element or the second element.

### BRIEF DESCRIPTION OF THE DRAWINGS

Specific embodiments of the invention will be described in the following part of the description, according to what is set out in the claims and with the aid of the accompanying tables of drawings, in which:
figure 1 and figure 2 illustrate, in perspective views, a shelf according to the present invention in two assembly steps thereof;
figure 3 and figure 4 illustrate, in an larger-scale view, a detail of the shelf according to the present invention, in which some parts have been removed to better evidence others, in two different assembly steps;
figures 5 and 6 illustrate a section view, in larger scale, of a detail of the shelf of figure 1 in two different operating situations.

### DESCRIPTION OF PREFERRED EMBODIMENTS

With reference to the accompanying figures, 1 denotes a shelf according to the first invention, The shelf 1 comprises a first element 2 and a second element 3, fixable to one another, and fixing means 4, 5,9 for enabling fixing of the first element to the second element 3.

The first element 2 comprises at least a seating 6 at a first surface 20, 21 thereof, while the fixing means 4, 5, 9 comprise at least a fixing pin 4 associated to the second element 3 at a relative second surface 310, 320. The seating 6 of the first element 2 is conformed such as to receive the pin 4.

In particular, the fixing means 4, 5, 9 further comprise: elastic means 5, associable to the pin 4 and fixable to the second element 3 at the second surface 310, 320, such that the pin 4 is mobile along a first direction perpendicular to the second surface 310, 320, from a non-operative position to an operative position, in which respectively it does not engage the seating 6 and it can engage the seating 6. The fixing means 4, 5, 9 further comprise guide means 9, arranged at the second surface 310, 320 of the second element 3, associable to the pin 4 and conformed such that the pin 4 is contained internally of the guide means 9 when it is in the non-operative position thereof, and partly projects from the guide means 9 when in the operative position thereof. The first element 2 and the second element 3 are positionable in such a way that the pin 4, when moving into the operative position thereof, engages the seating 6 and causes the fixing of the first element 2 to the second element 3.

The elastic means comprise, for example, at least a spring 5.

In an embodiment of the invention, the guide means 9 comprise a housing 90, at a second surface 310, 320 of the second element 3, of such dimensions that the pin 4 is totally contained internally of the housing 90 when in the relative non-operative configuration.

In the preferred embodiment of the invention, the guide means 9 comprise a housing 90 and a sleeve 91, conformed such as to at least partly insert in the housing 90 and for containing the pin 4 when in the relative non-operative configuration.

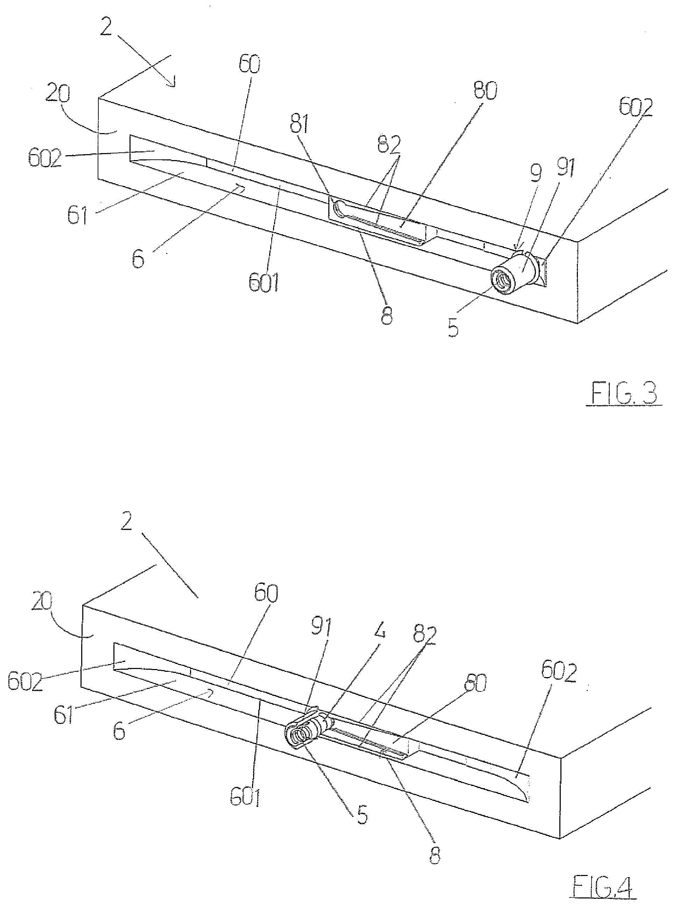

In particular, in the embodiment illustrated in the accompanying figures, the housing 90 is dimensioned such as to totally contain the sleeve 91 (see in particular figures 3-6). For example both the sleeve 91 and the housing 90 can exhibit a cylindrical section.

The guide means 9 thus enable the support of the pin 4 during the engaging of the seating 6 and following the engagement, guaranteeing stability to the shelf 1.

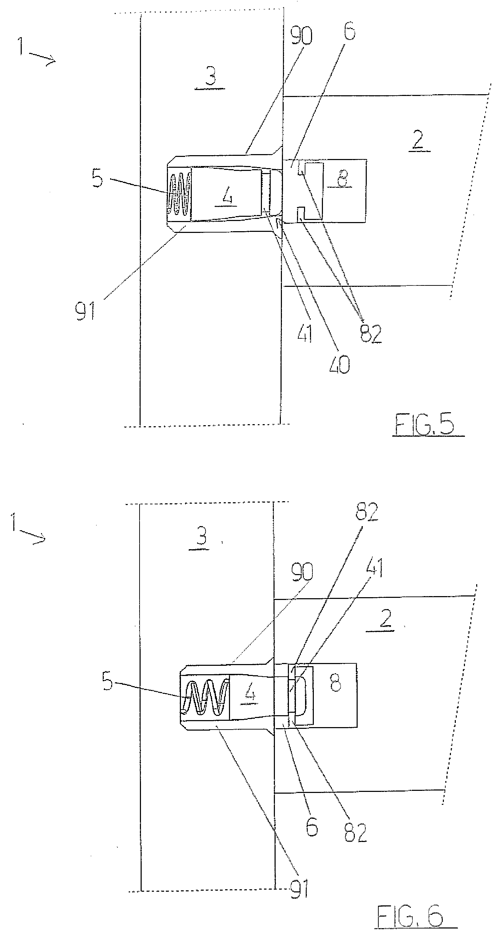

In detail, figure 5 shows the pin 4 in the relative non-operative configuration, before engaging the seating 6, while figure 6 shows the pin 4 in the operative configuration thereof, while it engages the seating 6.

According to the invention, the seating 6 develops along a second direction, perpendicular to the first direction, and conforms a channel 6 which is delimited by a bottom 60 and by lateral surfaces 61; the open top of the channel 6 being at the first surface 20, 21 of the first element 2 (see in particular figures 3 and 4).

In detail, the bottom 60 exhibits at least a straight first portion 601 and at least a second portion 602 at least at an end of the channel 6, which develops up to the top of the channel 6 with a different inclination with respect to the first position portion 601, such as to enable removing the pin 4 from the channel 6, as will become more evident in the following.

The shelf 1 of the invention further comprises a blocking element 8, positionable and fixable internally of the channel 6 such as to block the pin 4 once inserted in the channel 6; the blocking element 8 comprising an abutment 81 for encountering the pin 4 once inserted in the channel 6.

The conformation of the bottom 60 of the channel 6 is advantageously such that when it is necessary to remove the pin 4 from the channel 6, the pin 4 is slid along the channel 6 up to when it reaches the second portion 602, abuts the portion 602 (see in particular figure 3); in this sway the pin 4 is brought into the relative non-operative configuration and enters the guide means9 (in particular in the sleeve 91) thanks to the elastic means 5, and can therefore be extracted from the channel 6.

A metal plate can be present at the second portion 602 of the channel 6 to facilitate removal of the pin 4 from the channel 6.

In the invention, the second portion 602 exhibits a curved profile with concavities facing towards the top of the channel 6.

In the accompanying figures, the blocking element 8 comprises a groove 80 conformed such as to guide the pin 4 (once inserted in the channel 6) towards the abutment 81 and to allow blocking once the abutment 81 has been reached.

In particular, in the accompanying figures the blocking element 8 comprises two projecting edges 82 which delimits the groove 80; the pin 4, on the other hand, comprises a head 40 provided with an annular recess 41. In detail, the edges 82 which delimit the groove 80 are conformed such as to insert in the annular recess of the head 40 of the pin 4 once the pin 4 is at the groove 80 (see in particular figure 6).

As can be seen in figures 3 and 4, the groove 80 exhibits a profile of the dovetail type: in particular, the edges 82 delimiting the groove 80 extend such as both to converge towards the abutment 81. In this way the blocking of the pin 4 is guaranteed once the pin has reached the abutment 81. The blocking element 8 can be made for example of a moulded plastic material.

In a preferred embodiment, the pin 4 comprises a body having a truncoconical portion, and the guide means 9 exhibits a complementary portion to the body of the pin 4, such as to abut the truncoconical portion of the pin 4 when it is in the operative position (see in particular figure 6). In this way, when in the operative position the pin 4 is advantageously particularly stable, thus ensuring greater stability of all the shelf 1.

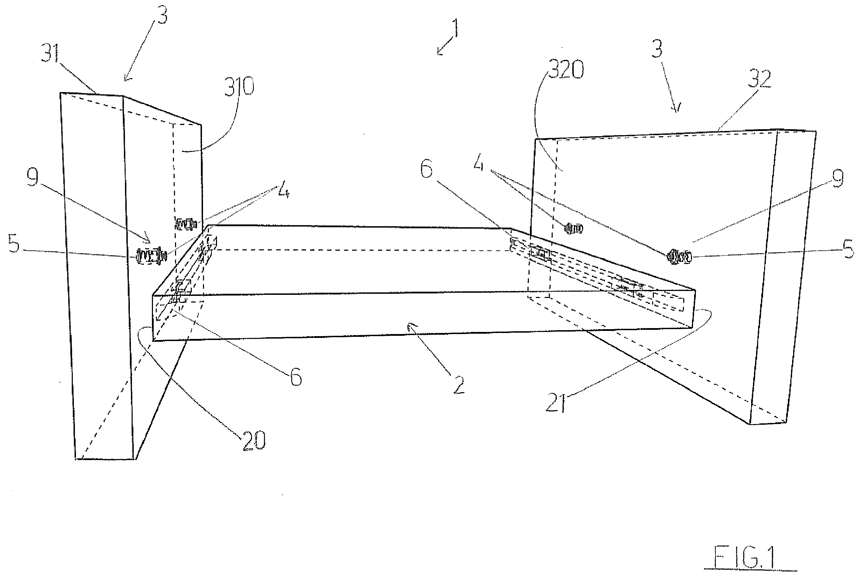

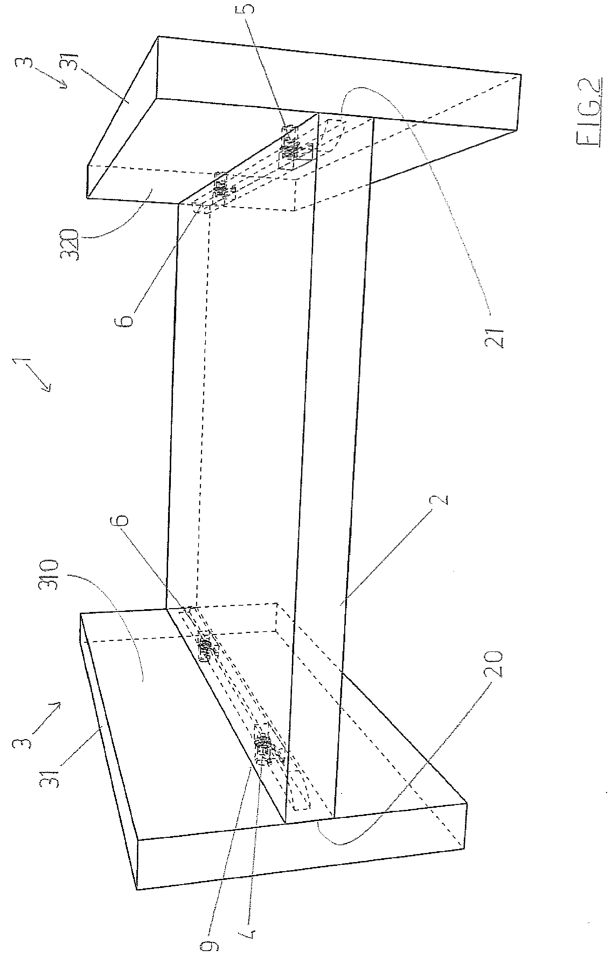

In the preferred embodiment illustrated in the accompanying figures (with particular reference to figures 1 and 2), the first element 2 is a plane and second element 3 is a frame (for example the shelf could be a bookcase). In particular, the frame 3 comprises a first upright 31 and a second upright 32, positionable at a certain reciprocal distance, such that a first surface 310 of the first upright 31 faces a first surface 320 of the second upright 32.

On the other hand, the plane 2 is of such dimensions as to be positionable between the first upright 31 and the second upright 32, such as to face, with a first side 20 and a second side 21 thereof, opposite to one another, respectively the first surface 310 of the first upright 31 and the first surface 320 of the second upright 32. In detail the plane 2 comprises at least two seatings 6, arranged respectively at the first side 20 and the second side 21.

The fixing means 4, 5, 9 comprise at least two fixing pins 4, and the elastic means 5 are associated to each pin 4 and fixable to the first surface 310 of the first upright 31 and the first surface 320 of the second upright 32, such that the pins 4 engage respectively the seating 6 of the first side 20 and the seating 6 of the second side 21 of the plane 2, once the plane 2 is arranged between the first upright 31 and the second upright 32.

The preferred embodiment of the invention illustrated in the accompanying figures (see in particular figure 1 and 2) includes a first channel 6 at the first side 20, and a second channel 6 at the second side 21 of the plane 2; a pair of blocking elements 8 is associated to each channel 6, such as the ones described herein above. Four pins 4 are associated, two by two, to the uprights 31, 32, by means of four springs 5.

Alternatively, in an embodiment that is not illustrated, the first element 2 is a frame and the second element 3 is a plane. The frame comprises a first upright and a second upright, positionable at a certain reciprocal distance, such that a first surface of the first upright faces a first surface of the second upright; the frame comprising at least two seatings, arranged respectively at the first surface of the first upright and the first surface of the second upright; the frame comprising at least two seatings, arranged respectively at the first surface of the first upright and the first surface of the second upright. The plane is dimensioned such as to be positionable between the first upright and the second upright, such as to face, with a first side thereof and a second side thereof, opposite one another, respectively the first surface of the first upright and the first surface of the second upright. The fixing means comprise at least two fixing pins; the elastic means being associated to each pin and fixable to the first side and the second side of the plane, such that the pins respectively engage the seating of the first surface of the first upright and the seating of the first surface of the second upright, once the plane is arranged between the first upright and the second upright.

In the two embodiments described above, the assembly of the shelf 1 is advantageously particularly rapid with respect to the prior art: in fact, it is possible to insert the plane between the two uprights (see in particular figure 1) and thus compress the elastic means 5 associated to each pin 4 such as to make them enter the guide means 9. It is therefore possible to align the seating 6 (in particular the channel) with each pin 4 so that when it is brought into the relative operating position, they engage the corresponding seating 6.

Clearly for each of the above-described embodiments a plurality of fixing pins 4 can be included such as to optimize the stability of the shelf 1.

The shelf 1 of the present invention advantageously prevents both in-view evidence of working (such as holes, openings etc.), and fixing pins visible from outside, once the first element 2 is assembled to the second element 3.

With particular reference to figure 2, in fact, it can be seen that the channel 6, the elastic means 5 and the pins 4 are completely hidden between the uprights 31, 32 and the plane 2.

The above has been described by way of non-limiting example, so that any constructional variants are understood to fall within the scope of the following claims.

## Claims

1. A shelf (1), comprising:
a first element (2) and a second element (3), fixable to one another;
fixing means (4, 5, 9) for enabling the first element (2) to be fixed to the second element (3);
the first element (2) comprising at least a seating (6) at a first surface (20, 21) thereof;
the fixing means (4, 5, 9) comprising at least a fixing pin (4), associable to the second element (3) at a second surface (310, 320) thereof;
the seating (6) of the first element (2) being conformed such as to receive the pin (4);
in which the fixing means (4, 5, 9) further comprise: elastic means (5), associable to the pin (4) and fixable to the second element (3) at the second surface (310, 320), such that the pin (4) is mobile along a first direction perpendicular to the second surface (310, 320), from a non-operative position to an operative position, in which respectively it does not engage the seating (6) and it can engage the seating (6); guide means (9), arranged at the second surface (310, 320) of the second element (3), associable to the pin (4) and conformed such that the pin (4) is contained internally of the guide means (9) when it is in the non-operative position thereof, and partly projects from the guide means (9) when in the operative position thereof; the first element (2) and the second element (3) being positionable in such a way that the pin (4), when moving into the operative position thereof, engages the seating (6) and causes the fixing of the first element (2) to the second element (3);
wherein
the seating (6) develops along a second direction, perpendicular to the first direction, and conforms a channel (6) which is delimited by a bottom (60) and by lateral surfaces (61); the open top of the channel (6) being at the first surface (20, 21) of the first element (2);
wherein the bottom (60) exhibits at least a straight first portion (601) and at least a second portion (602) at least at an end of the channel (6), which develops up to the top of the channel (6) with a different inclination with respect to the first portion (601), such as to enable removing the pin (4) from the channel (6); **characterized in that** the shelf (1) further comprising a blocking element (8), positionable and fixable internally of the channel (6) such as to block the pin (4) once inserted in the channel (6); the blocking element (8) comprising an abutment (81) for encountering the pin (4);
and **in that** the second portion (602) of the channel (6) exhibits a curved profile with a concavity thereof facing towards the top of the channel (6).

2. The shelf (1) of the preceding claim, wherein the guide means (9) comprise a housing (90) at the second surface (310, 320) of the second element (3), dimensioned such that the pin (4) is totally contained internally of the housing (90) when it is in the non-operative configuration thereof.

3. The shelf (1) of claim 1, wherein the guide means (9) comprise a housing (90) and a sleeve (91), conformed such as to at least partly insert internally of the housing (90) and such as to contain the pin (4) when it is in the non-operative configuration thereof.

4. The shelf (1) of claim 1, wherein the blocking element (8) comprises a groove (80) conformed such as to guide the pin (4) towards the abutment (81) and such as to enable blocking once the abutment (81) has been encountered.

5. The shelf (1) of the preceding claim, wherein the blocking element (8) comprises two projecting edges (82) that delimit the groove (80); and wherein the pin (4) comprises a head (40) provided with an annular recess (41); the edges (82) being conformed such as to insert in the annular recess of the head (40) of the pin (4) once the pin (4) is positioned at the groove (80).

6. The shelf of any one of the preceding claims, wherein the pin (4) comprises a body having a truncoconical portion, and wherein the guide means (9) exhibit a complementary portion to the pin body (4), such as to encounter the truncoconical portion of the pin (4) when it is in the operative position thereof.

7. The shelf of any one of claims from 1 to 6, wherein the first element (2) is a plane and the second element (3) is a frame; and wherein the frame (3) comprises a first upright (31) and a second upright (32), positionable at a certain reciprocal distance, such that a first surface (310) of the first upright (31) faces a first surface (320) of the second upright (32);
and wherein the plane (2) has dimensions such as to be positionable between the first upright (31) and the second upright (32), such as to face, with a first side (20) thereof and a second side thereof (21), opposite one another, respectively the first surface (310) of the first upright (31) and the first surface (320) of the second upright (32); the plane (2) comprising at least two seatings (6), arranged respectively at the first side (20) and the second side (21);
the fixing means (4, 5, 9) comprising at least two fixing pins (4); the elastic means (5) being associated to each pin (4) and fixable to the first surface (310) of the first upright (31) and the first surface (320) of the second upright (32), in such a way that the pins (4) respectively engage the seating (6) of the first side (20) and the seating (6) of the second side (21) of the plane (2), once the plane (2) is arranged between the first upright (31) and the second upright (32).

8. The shelf (1) of any one of claims from 1 to 6, wherein the first element (2) is a frame and the second element (3) is a plane; and wherein the frame comprises a first upright and a second upright, positionable at a certain reciprocal distance, such that a first surface of the first upright faces a first surface of the second upright; the frame comprising at least two seatings, arranged respectively at the first surface of the first upright and the first surface of the second upright;
and wherein the plane is dimensioned such as to be positionable between the first upright and the second upright, such as to face, with a first side thereof and a second side thereof, opposite one another, respectively the first surface of the first upright and the first surface of the second upright;
the fixing means comprising at least two fixing pins; the elastic means being associated to each pin and fixable to the first side and the second side of the plane, such that the pins respectively engage the seating of the first surface of the first upright and the seating of the first surface of the second upright, once the plane is arranged between the first upright and the second upright.

## Patentansprüche

1. Regal (1), Folgendes beinhaltend:
ein erstes Element (2) und ein zweites Element (3), die aneinander befestigt werden können;
Befestigungsmittel (4, 5, 9), die es ermöglichen, das erste Element (2) an dem zweiten Element (3) zu befestigen;
wobei das erste Element (2) zumindest eine Aufnahme (6) an einer ersten Oberfläche (20, 21) desselben aufweist;
wobei die Befestigungsmittel (4, 5, 9) zumindest einen Befestigungsstift (4) beinhalten, der mit dem zweiten Element (3) an einer zweiten Oberfläche (310, 320) desselben verbunden werden kann;
wobei die Aufnahme (6) des ersten Elements (2) so beschaffen ist, dass sie den Stift (4) aufnehmen kann;
worin die Befestigungsmittel (4, 5, 9) ferner Folgendes beinhalten:
elastische Mittel (5), die mit dem Stift (4) verbunden werden können und an dem zweiten Element (3) an der zweiten Oberfläche (310, 320) befestigt werden können, so dass der Stift (4) entlang einer ersten Richtung orthogonal zu der zweiten Oberfläche (310, 320) beweglich ist von einer Nichtarbeitsstellung in eine Arbeitsstellung, in welcher er jeweils nicht mit der Aufnahme (6) in Eingriff tritt beziehungsweise mit der Aufnahme (6) in Eingriff treten kann; Führungsmittel (9), die an der zweiten Oberfläche (310, 320) des zweiten Elements (3) angeordnet sind, die mit dem Stift (4) verbunden werden können und die derart beschaffen sind, dass der Stift (4) innerhalb der Führungsmittel (9) enthalten ist, wenn sich dieser in seiner Nichtarbeitsstellung befindet, und dass er teilweise von den Führungsmitteln (9) herausragt, wenn er sich in seiner Arbeitsstellung befindet; wobei das erste Element (2) und das zweite Element (3) derart positionierbar sind, dass der Stift (4), wenn er sich in seine Arbeitsstellung bewegt, mit der Aufnahme (6) in Eingriff tritt und die Befestigung des ersten Elements (2) an dem zweiten Element (3) bewirkt;
worin sich die Aufnahme (6) entlang einer zweiten Richtung erstreckt, die orthogonal zu der ersten Richtung ist, und einen Kanal (6) bildet, der von einem Boden (60) und von seitlichen Oberflächen (61) begrenzt ist;
wobei sich die offene Oberseite des Kanals (6) an der ersten Oberfläche (20, 21) des ersten Elements (2) befindet;
worin der Boden (60) zumindest einen geraden ersten Abschnitt (601) aufweist und zumindest einen zweiten Abschnitt (602) zumindest an einem Ende des Kanals (6) aufweist, der sich bis zu der Oberseite des Kanals (6) mit einer Neigung erstreckt, die sich von der des ersten Abschnittes (601) unterscheidet, um das Entfernen des Stiftes (4) aus dem Kanal (6) zu ermöglichen; **dadurch gekennzeichnet, dass** das Regal (1) ferner ein Blockierelement (8) beinhaltet, das innerhalb des Kanals (6) angeordnet und befestigt werden kann, um den Stift (4) zu blockieren, nachdem dieser in den Kanal (6) eingeführt ist; wobei das Blockierelement (8) einen Anschlag (81) zum Auftreffen auf dem Stift (4) beinhaltet;
und dadurch, dass der zweite Abschnitt (602) des Kanals (6) ein kurvenförmiges Profil aufweist, dessen Konkavität der Oberseite des Kanals (6) zugewandt ist.

2. Regal (1) nach dem vorhergehenden Anspruch, worin die Führungsmittel (9) ein Gehäuse (90) an der zweiten Oberfläche (310, 320) des zweiten Elements (3) aufweisen, das derart bemessen ist, dass der Stift (4) vollständig im Innern des Gehäuses (90) enthalten ist, wenn er sich in seiner Nichtarbeitskonfiguration befindet.

3. Regal (1) nach Anspruch 1, worin die Führungsmittel (9) ein Gehäuse (90) und eine Manschette (91) beinhalten, die derart beschaffen ist, dass sie zumindest teilweise in das Innere des Gehäuses (90) eingeführt sein kann und den Stift (4) aufnehmen kann, wenn sich dieser in seiner Nichtarbeitskonfiguration befindet.

4. Regal (1) nach Anspruch 1, worin das Blockierelement (8) eine Rille (80) beinhaltet, die derart beschaffen ist, dass sie den Stift (4) zu dem Anschlag (81) hin führt und dass sie dessen Blockierung ermöglicht, sobald er auf den Anschlag (81) getroffen ist.

5. Regal (1) nach dem vorhergehenden Anspruch, worin das Blockierelement (8) zwei hervorstehende Kanten (82) aufweist, welche die Rille (80) begrenzen; und worin der Stift (4) einen Kopf (40) beinhaltet, der eine ringförmige Aussparung (41) aufweist; wobei die Kanten (82) derart beschaffen sind, dass sie in die ringförmige Aussparung des Kopfes (40) des Stiftes (4) eintreten, sobald der Stift (4) sich an der Rille (80) befindet.

6. Regal nach einem der vorhergehenden Ansprüche, worin der Stift (4) einen Körper beinhaltet, der einen kegelstumpfförmigen Abschnitt aufweist, und worin die Führungsmittel (9) einen zu dem Körper des Stiftes (4) komplementären Abschnitt aufweisen, der dazu bestimmt ist, gegen den kegelstumpfförmigen Abschnitt des Stiftes (4) anzuliegen, wenn sich dieser in seiner Arbeitsstellung befindet.

7. Regal nach einem der Ansprüche von 1 bis 6, worin das erste Element (2) ein Regalbrett ist und das zweite Element (3) ein Rahmen ist; und worin der Rahmen (3) eine erste Wange (31) und eine zweite Wange (32) beinhaltet, die in einem bestimmten Abstand voneinander angeordnet werden können, so dass eine erste Oberfläche (310) der ersten Wange (31) einer ersten Oberfläche (320) der zweiten Wange (32) zugewandt ist;
und worin das Regalbrett (2) derart bemessen ist, dass es zwischen der ersten Wange (31) und der zweiten Wange (32) angeordnet werden kann, so dass es mit einer ersten Seite (20) desselben beziehungsweise einer zweiten Seite (21) desselben, die einander gegenüberliegen, jeweils der ersten Oberfläche (310) der ersten Wange (31) beziehungsweise der ersten Oberfläche (320) der zweiten Wange (32) zugewandt ist; wobei das Regalbrett (2) zumindest zwei Aufnahmen (6) beinhaltet, die jeweils an der ersten Seite (20) beziehungsweise an der zweiten Seite (21) angeordnet sind;
wobei die Befestigungsmittel (4, 5, 9) zumindest zwei Befestigungsstifte (4) beinhalten; wobei die elastischen Mittel (5) mit jedem Stift (4) verbunden sind und an der ersten Oberfläche (310) der ersten Wange (31) und der ersten Oberfläche (320) der zweiten Wange (32) so befestigt werden können, dass die Stifte (4) jeweils mit der Aufnahme (6) der ersten Seite (20) beziehungsweise mit der Aufnahme (6) der zweiten Seite (21) des Regalbretts (2) in Eingriff treten, sobald das Regalbrett (2) zwischen der ersten Wange (31) und der zweiten Wange (32) angeordnet wird.

8. Regal (1) nach einem der Ansprüche von 1 bis 6, worin das erste Element (2) ein Rahmen ist und das zweite Element (3) ein Regalbrett ist; und worin der Rahmen eine erste Wange und eine zweite Wange beinhaltet, die in einem bestimmten Abstand voneinander angeordnet werden können, so dass eine erste Oberfläche der ersten Wange einer ersten Oberfläche der zweiten Wange zugewandt ist; wobei der Rahmen zumindest zwei Aufnahmen aufweist, die jeweils an der ersten Oberfläche der ersten Wange beziehungsweise an der ersten Oberfläche der zweiten Wange angeordnet sind;
und worin das Regalbrett derart bemessen ist, dass es zwischen der ersten Wange und der zweiten Wange angeordnet werden kann, so dass es mit einer ersten Seite desselben beziehungsweise einer zweiten Seite desselben, die einander gegenüberliegen, jeweils der ersten Oberfläche der ersten Wange beziehungsweise der ersten Oberfläche der zweiten Wange zugewandt ist;
wobei die Befestigungsmittel zumindest zwei Befestigungsstifte beinhalten; wobei die elastischen Mittel mit jedem Stift verbunden sind und an der ersten Seite und der zweiten Seite des Regalbretts befestigt werden können, so dass die Stifte jeweils mit der Aufnahme der ersten Oberfläche der ersten Wange und der Aufnahme der ersten Oberfläche der zweiten Wange in Eingriff treten, sobald das Regalbrett zwischen der ersten Wange und der zweiten Wange angeordnet wird.

## Revendications

1. Une étagère (1), comprenant:
un premier élément (2) et un deuxième élément (3), pouvant être fixés l'un à l'autre;
des moyens de fixation (4, 5, 9) pour permettre la fixation du premier élément (2) au deuxième élément (3) ;
le premier élément (2) comprenant au moins un logement (6) au niveau d'une première surface (20, 21) respective;
les moyens de fixation (4, 5, 9) comprenant au moins une goupille de fixation (4), pouvant être associée au deuxième élément (3) au niveau d'une deuxième surface (310, 320) de celui-ci;
le logement (6) du premier élément (2) étant conformé de manière à recevoir la goupille (4);
dans laquelle les moyens de fixation (4, 5, 9) comprennent en outre : des moyens élastiques (5), pouvant être associés à la goupille (4) et pouvant être fixés au deuxième élément (3) au niveau de la deuxième surface (310, 320), de manière à ce que la goupille (4) soit mobile le long d'une première direction perpendiculaire à la deuxième surface (310, 320), d'une position non opérationnelle à une position opérationnelle, dans lesquelles respectivement elle n'assujettit pas le logement (6) et elle peut assujettir le logement (6) ;
des moyens de guidage (9), disposés au niveau de la deuxième surface (310, 320) du deuxième élément (3), pouvant être associés à la goupille (4) et conformés de manière à ce que la goupille (4) soit contenue à l'intérieur des moyens de guidage (9) quand elle est dans la position non opérationnelle respective, et dépasse partiellement des moyens de guidage (9) quand elle est dans la position opérationnelle respective ; le premier élément (2) et le deuxième élément (3) pouvant être positionnés de manière à ce que la goupille (4), quand se déplaçant dans la position opérationnelle respective, assujettisse le logement (6) et détermine la fixation du premier élément (2) au deuxième élément (3);
dans laquelle le logement (6) se développe le long d'une deuxième direction, perpendiculaire à la première direction, et forme un canal (6) qui est délimité par un fond (60) et par des surfaces latérales (61) ; le sommet ouvert du canal (6) étant au niveau de la première surface (20, 21) du premier élément (2);
dans laquelle le fond (60) présente au moins une première portion (601) rectiligne et au moins une deuxième portion (602), au moins au niveau d'une extrémité du canal (6), qui se développe vers le sommet du canal (6) avec une inclinaison différente par rapport à la première portion (601), de manière à pouvoir enlever la goupille (4) du canal (6) ; **caractérisée en ce que**
l'étagère (1) comprend en outre un élément de blocage (8), pouvant être positionné et fixé à l'intérieur du canal (6) de manière à bloquer la goupille (4) une fois insérée dans le canal (6) ; l'élément de blocage (8) comprenant une butée (81) destinée à rencontrer la goupille (4);
et **en ce que** la deuxième portion (602) du canal (6) présente un profil incurvé avec une concavité de celui-ci orientée vers le sommet du canal (6).

2. L'étagère (1) selon la revendication précédente, dans laquelle les moyens de guidage (9) comprennent un logement (90) au niveau de la deuxième surface (310, 320) du deuxième élément (3), dimensionné de manière à ce que la goupille (4) soit totalement contenue à l'intérieur du logement (90) quand elle est dans la configuration non opérationnelle respective.

3. L'étagère (1) selon la revendication 1, dans laquelle les moyens de guidage (9) comprennent un logement (90) et un manchon (91), conformé de manière à s'insérer au moins partiellement à l'intérieur du logement (90) et de manière à contenir la goupille (4) quand elle est dans la configuration non opérationnelle respective.

4. L'étagère (1) selon la revendication 1, dans laquelle l'élément de blocage (8) comprend une rainure (80) conformée de manière à guider la goupille (4) vers la butée (81) et de manière à en permettre le blocage une fois en butée contre la butée (81).

5. L'étagère (1) selon la revendication précédente, dans laquelle l'élément de blocage (8) comprend deux bords saillants (82) qui délimitent la rainure (80) ; et dans laquelle la goupille (4) comprend une tête (40) dotée d'un renfoncement annulaire (41) ; les bords (82) étant conformés de manière à s'insérer dans le renfoncement annulaire de la tête (40) de la goupille (4) une fois que ladite goupille (4) est positionnée au niveau de la rainure (80).

6. L'étagère selon l'une quelconque des revendications précédentes, dans laquelle la goupille (4) comprend un corps ayant une portion troncoconique, et dans laquelle les moyens de guidage (9) présentent une portion complémentaire au corps de la goupille (4), de manière à rencontrer la portion troncoconique de la goupille (4) quand elle est dans la position opérationnelle respective.

7. L'étagère selon l'une quelconque des revendications de 1 à 6, dans laquelle le premier élément (2) est une tablette et le deuxième élément (3) est un châssis ; et dans laquelle le châssis (3) comprend un premier montant (31) et un deuxième montant (32), pouvant être positionnés à une distance réciproque donnée, de manière à ce qu'une première surface (310) du premier montant (31) soit face à une première surface (320) du deuxième montant (32) ;
et dans laquelle la tablette (2) a des dimensions telles qu'elle peut être positionnée entre le premier montant (31) et le deuxième montant (32), de manière à faire face, avec un premier côté (20) respectif et un deuxième côté (21) respectif, opposés entre eux, respectivement à la première surface (310) du premier montant (31) et à la première surface (320) du deuxième montant (32) ; la tablette (2) comprenant au moins deux logements (6), disposés respectivement au niveau du premier côté (20) et du deuxième côté (21) ;
les moyens de fixation (4, 5, 9) comprenant au moins deux goupilles de fixation (4) ; les moyens élastiques (5) étant associés à chaque goupille (4) et pouvant être fixés à la première surface (310) du premier montant (31) et à la première surface (320) du deuxième montant (32), de manière à ce que les goupilles (4) assujettissent respectivement le logement (6) du premier côté (20) et le logement (6) du deuxième côté (21) de la tablette (2), une fois que la tablette (2) est disposée entre le premier montant (31) et le deuxième montant (32).

8. L'étagère (1) selon l'une quelconque des revendications de 1 à 6, dans laquelle le premier élément (2) est un châssis et le deuxième élément (3) est une tablette ; et dans laquelle le châssis comprend un premier montant et un deuxième montant, pouvant être positionnés à une distance réciproque donnée, de manière à ce qu'une première surface du premier montant soit face à une première surface du deuxième montant; le châssis comprenant au moins deux logements, disposés respectivement au niveau de la première surface du premier montant et de la première surface du deuxième montant;
et dans laquelle la tablette est dimensionnée de manière à pouvoir être positionnée entre le premier montant et le deuxième montant, de manière à faire face, avec un premier côté respectif et un deuxième côté respectif, opposés entre eux, respectivement à la première surface du premier montant et à la première surface du deuxième montant;
les moyens de fixation comprenant au moins deux goupilles de fixation; les moyens élastiques étant associés à chaque goupille et pouvant être fixés au premier côté et au deuxième côté de la tablette, de manière à ce que les goupilles assujettissent respectivement le logement de la première surface du premier montant et le logement de la première surface du deuxième montant, une fois que la tablette est disposée entre le premier montant et le deuxième montant.
